# EUROPEAN PATENT APPLICATION

(11) **EP 4 742 733 A1**
(43) Date of publication of application: **13.05.2026**
(21) Application number: 24844686.6
(22) Date of filing: 18.07.2024
(51) Int. Cl.: H04W 24/02

(54) **COMMUNICATION METHOD AND APPARATUS**

(30) Priority: 24.07.2023 CN 202310914048
(71) Applicant: Huawei Technologies Co., Ltd., Shenzhen, Guangdong 518129 (CN)
(72) Inventor: CHEN, Ying, Shenzhen, Guangdong 518129 (CN); ZHANG, Jiayin, Shenzhen, Guangdong 518129 (CN); WANG, Jun, Shenzhen, Guangdong 518129 (CN)
(74) Representative: Maiwald GmbH
(86) International application number: PCT/CN2024/106125
(87) International publication number: WO 2025/020994

(57) **Abstract**

Embodiments of this application disclose a communication method and apparatus. The method includes: A terminal device receives, in a connected mode, a global navigation satellite system GNSS measurement interval configured by a network device, where the GNSS measurement interval is used to perform GNSS measurement. **If** the GNSS measurement fails to be performed within the GNSS measurement interval, the terminal device extends the GNSS measurement interval, and continues to perform GNSS measurement in a first time period after the GNSS measurement interval, where the first time period is a time period after an end time point of the GNSS measurement interval. According to embodiments of this application, for a terminal device of an IoT type in a satellite communication scenario and in long-time connection communication, behavior of the terminal device in different cases is specified, to ensure that communication is not affected when the GNSS measurement is performed, thereby improving communication efficiency and quality.

## Description

This application claims priority to Chinese Patent Application No. 202310914048.2, filed with the China National Intellectual Property Administration on July 24, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, satellite communication has been introduced in the 3^{rd} generation partnership project (3^{rd} generation partnership project, 3GPP) standard. As a communication scenario of 5^{th} generation mobile network (5^{th} generation mobile network, 5G) communication, the satellite communication can support not only a terminal device of a 5G type, but also a terminal device of an Internet of Things (internet of things, IoT) type. Compared with terrestrial communication, the satellite communication has unique advantages. For example, the satellite communication can provide a wider coverage area, and satellite base stations are not vulnerable to natural disasters or external forces. The satellite communication can provide communication services for some areas that cannot be covered by terrestrial communication networks, such as oceans and forests; enhance reliability of the 5G communication, for example, ensure better communication services in airplanes and trains, and users on these transportation vehicles; and provide more data transmission resources for the 5G communication, to improve a network rate. Therefore, supporting both terrestrial communication and the satellite communication is an inevitable trend of future 5G communication, and has great benefits in terms of wide coverage, reliability, multi-connection, high throughput, and the like.

The satellite communication features high mobility and large communication delay. A difference between the satellite communication and the terrestrial communication is that a terminal, on the basis of existing uplink synchronization, further needs to implement synchronization based on global navigation satellite system (global navigation satellite system, GNSS) information, an ephemeris, or other auxiliary information. For the terminal device of the IoT type, considering that most IoT services are short packets and are periodically transmitted, the 3GPP standard enhances only a short-time connection communication manner, but still has not standardized a long-time connection communication manner, failing to support a long-time connection communication scenario.

### SUMMARY

Embodiments of this application provide a communication method and apparatus, to specify behavior of a terminal device in different cases, so as to improve communication efficiency and quality.

According to a first aspect, an embodiment of this application provides a communication method, including:

A terminal device receives, in a connected mode, a global navigation satellite system GNSS measurement interval configured by a network device, where the GNSS measurement interval is used to perform GNSS measurement. If the GNSS measurement fails to be performed within the GNSS measurement interval, the terminal device extends the GNSS measurement interval, and continues to perform GNSS measurement in a first time period after the GNSS measurement interval, where the first time period is a time period after an end time point of the GNSS measurement interval.

When an IoT terminal device is in a satellite communication scenario and in long-time connection communication, GNSS information of the terminal device in a long-time connected mode may expire. Therefore, the terminal device performs GNSS measurement within the GNSS measurement interval configured by the network device. If the GNSS measurement fails to be performed within the GNSS measurement interval, the terminal device obtains a period of time through extension to continue to perform GNSS measurement, so as to obtain GNSS information in a timely manner. This ensures that communication is not affected when the GNSS measurement is performed, and improves communication efficiency and quality.

In a possible design, if the GNSS measurement fails to be performed in the first time period after the GNSS measurement interval, the terminal device switches from the connected mode to an idle mode. In other words, if the GNSS information is still not obtained in the first time period after extension, the terminal device switches to the idle mode to save power.

In another possible design, if the GNSS measurement is successfully performed in the first time period after the GNSS measurement interval, the terminal device sends first GNSS validity duration to the network device, where the first GNSS validity duration is a time interval between the end time point of the GNSS measurement interval and an expiration time point of a GNSS validity period, or between a time point when the terminal device sends the GNSS validity period to the network device and the expiration time point of the GNSS validity period. Therefore, it is expected that the GNSS measurement interval is rescheduled to perform GNSS measurement before the expiration time point of the GNSS validity period.

In another possible design, the terminal device monitors a physical downlink control channel PDCCH in a second time period after the GNSS measurement interval, where the second time period is between the end time point of the GNSS measurement interval and a time point before an expiration time point of a GNSS validity period. If the PDCCH is not detected through monitoring in the second time period after the GNSS measurement interval, the terminal device continues to perform GNSS measurement in the first time period after the GNSS measurement interval. In a case in which the PDCCH is not detected through monitoring, the GNSS measurement continues to be performed in the first time period after extension, ensuring that the GNSS information is obtained in a timely manner.

In another possible design, the terminal device monitors a physical downlink control channel PDCCH in a second time period after the GNSS measurement interval, where the second time period is between the end time point of the GNSS measurement interval and a time point before an expiration time point of a GNSS validity period. If the PDCCH is detected through monitoring in the second time period after the GNSS measurement interval, the terminal device sends feedback information to the network device based on scheduling information carried by the PDCCH. In a case in which the PDCCH is detected through monitoring, feedback is performed based on the scheduling information, ensuring that the GNSS measurement and communication do not affect each other.

In another possible design, the terminal device determines second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period. When the second GNSS validity duration is greater than a first preset threshold, the terminal device monitors the physical downlink control channel PDCCH in the second time period after the GNSS measurement interval. In a case in which the second GNSS validity duration is greater than the first preset threshold, the PDCCH is monitored, thereby ensuring validity of the scheduling information carried by the PDCCH. When the second GNSS validity duration is less than or equal to the first preset value, if the network device schedules, in the second time period after the GNSS measurement interval, the terminal device to perform GNSS measurement, a time point when the terminal device sends the feedback information to the network device may exceed the expiration time point of the GNSS validity period. Therefore, when the second GNSS validity duration is less than or equal to the first preset value, the terminal device may extend the GNSS measurement interval to the expiration time point of the GNSS validity period, and perform GNSS measurement in the first time period after extension. The network device does not schedule feedback in this period.

In another possible design, the scheduling information is for scheduling a time-frequency resource of the feedback information, and if a feedback time point of the feedback information on the time-frequency resources exceeds the expiration time point of the GNSS validity period, the terminal device performs one or more of the following steps:
switching from the connected mode to an idle mode;
starting to perform GNSS measurement after receiving first signaling, and if the GNSS measurement fails to be performed, switching from the connected mode to the idle mode, where the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

In another possible design, the terminal device determines second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period. When the second GNSS validity duration is greater than a first preset threshold, the terminal device sends the feedback information to the network device based on the scheduling information carried by the PDCCH. When the second GNSS validity duration is less than or equal to the first preset threshold, as the terminal device does not perform feedback when performing GNSS measurement, the network device may send the scheduling information to the terminal device after the expiration time point of the GNSS validity period, where the scheduling information is for scheduling the terminal device to perform GNSS measurement feedback. The terminal device may receive the scheduling information of the network device after the expiration time point of the GNSS validity period, to perform GNSS measurement feedback. In a case in which the second GNSS validity duration is greater than the first preset threshold, the feedback information is sent, to ensure that a rescheduled GNSS measurement resource does not exceed the expiration time point of the GNSS validity period, thereby ensuring validity of the rescheduled GNSS measurement resource.

In another possible design, the feedback information includes the second GNSS validity duration. By feeding back the second GNSS validity duration, the network device is expected to reschedule the GNSS measurement in the second GNSS validity duration.

In another possible design, if a GNSS measurement resource scheduled by the network device is received in the second GNSS validity duration, the terminal device continues to perform GNSS measurement on the GNSS measurement resource. The GNSS measurement continues to be performed on the GNSS measurement resource scheduled by the network device, to ensure that the GNSS information is obtained in a timely manner.

In another possible design, if a GNSS measurement resource scheduled by the network device is not received in the second GNSS validity duration, the terminal device switches from the connected mode to an idle mode or starts to perform GNSS measurement once at the expiration time point of the GNSS validity period. In a case in which the network device does not schedule the GNSS measurement resource, the terminal device switches to the idle mode to save power, or the terminal device extends the GNSS measurement interval to perform GNSS measurement, to ensure that the GNSS information is obtained in a timely manner.

In another possible design, the terminal device determines second GNSS validity duration, where the second GNSS validity duration is between the end time point of the GNSS measurement interval and an expiration time point of a GNSS validity period, or between a time point when the GNSS measurement fails to be performed and the expiration time point of the GNSS validity period. When the second GNSS validity duration is less than or equal to a first preset threshold, the terminal device extends the GNSS measurement interval. In addition, the terminal device continues to perform GNSS measurement in the first time period after the GNSS measurement interval. If the GNSS measurement that continues to be performed in the first time period after the GNSS measurement interval fails, the terminal device switches from the connected mode to an idle mode. When the second GNSS validity duration is less than or equal to the first preset threshold, the GNSS measurement interval is extended, to ensure that the GNSS information can be obtained in a timely manner within an GNSS measurement interval after extension.

In another possible design, if the GNSS measurement fails to be performed in the first time period after the GNSS measurement interval, the terminal device sends first indication information to the network device, where the first indication information indicates the second GNSS validity duration and/or failed GNSS measurement. Different from sending an uplink signal when the GNSS measurement is successfully performed, the first indication information is sent when the GNSS measurement fails to be performed, so that the network device can reschedule the GNSS measurement of the terminal device.

It should be noted that behavior of the terminal device and duration related to the behavior of the terminal device, such as whether the terminal device monitors the PDCCH and duration of monitoring the PDCCH, or whether the terminal device independently performs GNSS measurement and duration of performing GNSS measurement, may both be configured by the network device.

According to a second aspect, an embodiment of this application provides a communication apparatus, including:
a receiving module, configured to receive, in a connected mode, a global navigation satellite system GNSS measurement interval configured by a network device, where the GNSS measurement interval is used to perform GNSS measurement; and
a processing module, configured to: if the GNSS measurement fails to be performed within the GNSS measurement interval, extend the GNSS measurement interval, and continue to perform GNSS measurement in a first time period after the GNSS measurement interval, where the first time period is a time period after an end time point of the GNSS measurement interval.

In a possible design, the processing module is further configured to: if the GNSS measurement fails to be performed in the first time period after the GNSS measurement interval, switch from the connected mode to an idle mode.

In another possible design, the apparatus further includes:
a sending module, configured to: if the GNSS measurement is successfully performed in the first time period after the GNSS measurement interval, send first GNSS validity duration to the network device, where the first GNSS validity duration is a time interval between the end time point of the GNSS measurement interval and an expiration time point of a GNSS validity period, or between a time point when the terminal device sends the GNSS validity period to the network device and the expiration time point of the GNSS validity period.

In another possible design, the processing module is further configured to: monitor a physical downlink control channel PDCCH in a second time period after the GNSS measurement interval, where the second time period is between the end time point of the GNSS measurement interval and a time point before an expiration time point of a GNSS validity period; and if the PDCCH is not detected through monitoring in the second time period after the GNSS measurement interval, continue to perform GNSS measurement in the first time period after the GNSS measurement interval.

In another possible design, the processing module is further configured to: monitor a physical downlink control channel PDCCH in a second time period after the GNSS measurement interval, where the second time period is between the end time point of the GNSS measurement interval and a time point before an expiration time point of a GNSS validity period; and if the PDCCH is detected through monitoring in the second time period after the GNSS measurement interval, send feedback information to the network device based on scheduling information carried by the PDCCH.

In another possible design, the processing module is further configured to: determine second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, monitor the physical downlink control channel PDCCH in the second time period after the GNSS measurement interval. If the PDCCH is not detected through monitoring by the terminal device by arrival of the expiration time point of the GNSS validity period, the terminal device switches from the connected mode to an idle mode.

In another possible design, the scheduling information is for scheduling a time-frequency resource of the feedback information.

The processing module is further configured to: if a feedback time point of the feedback information on the time-frequency resources exceeds the expiration time point of the GNSS validity period, perform one or more of the following steps:
switching from the connected mode to an idle mode;
starting to perform GNSS measurement after receiving first signaling, and if the GNSS measurement fails to be performed, switching from the connected mode to the idle mode, where the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

In another possible design, the processing module is further configured to: determine second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, send the feedback information to the network device based on the scheduling information carried by the PDCCH; or when the second GNSS validity duration is less than or equal to the first preset threshold, the terminal device receives the scheduling information of the network device after the expiration time point of the GNSS validity period, to perform GNSS measurement feedback.

In another possible design, the feedback information includes the second GNSS validity duration.

In another possible design, the processing module is further configured to: if a GNSS measurement resource scheduled by the network device is received in the second GNSS validity duration, continue to perform GNSS measurement on the GNSS measurement resource.

In another possible design, the processing module is further configured to: if a GNSS measurement resource scheduled by the network device is not received in the second GNSS validity duration, switch from the connected mode to an idle mode or start to perform GNSS measurement once at the expiration time point of the GNSS validity period.

In another possible design, the processing module is further configured to: determine second GNSS validity duration, where the second GNSS validity duration is between the end time point of the GNSS measurement interval and an expiration time point of a GNSS validity period, or between a time point when the GNSS measurement fails to be performed and the expiration time point of the GNSS validity period; and when the second GNSS validity duration is less than or equal to a first preset threshold, extend the GNSS measurement interval, or continue to perform GNSS measurement in the first time period after the GNSS measurement interval; and if the GNSS measurement fails to be performed in the first time period after the GNSS measurement interval, the terminal device switches from the connected mode to an idle mode.

In another possible design, the apparatus further includes:
a sending module, configured to: if the GNSS measurement fails to be performed in the first time period after the GNSS measurement interval, send first indication information to the network device, where the first indication information indicates the second GNSS validity duration and/or failed GNSS measurement.

For operations performed by the communication apparatus and beneficial effect thereof, refer to the method according to the first aspect and beneficial effect thereof. Repeated parts are not described again.

According to a third aspect, this application provides a communication apparatus. The communication apparatus includes a processor and a memory. The memory is configured to store a computer program. The processor is configured to execute the computer program stored in the memory, to enable the communication apparatus to perform the method according to the first aspect.

According to a fourth aspect, this application provides a communication apparatus. The apparatus may be a terminal device, an apparatus in the terminal device, or an apparatus that can be used together with the terminal device. The communication apparatus may also be a chip system. The communication apparatus may perform the method according to the first aspect. A function of the communication apparatus may be implemented by hardware, or may be implemented by hardware executing corresponding software. The hardware or the software includes one or more modules corresponding to the foregoing function. The module may be software and/or hardware. For operations performed by the communication apparatus and beneficial effect thereof, refer to the method according to the first aspect and beneficial effect thereof. Repeated parts are not described again.

According to a fifth aspect, this application provides a computer-readable storage medium. The computer-readable storage medium is configured to store a computer program, and when the computer program is executed, the method according to the first aspect is implemented.

According to a sixth aspect, this application provides a computer program product including a computer program. When the computer program is executed, the method according to the first aspect is implemented.

According to a seventh aspect, an embodiment of this application provides a communication system. The communication system includes at least one terminal device and at least one network device, and the terminal device is configured to perform the steps in the first aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1(a) is a diagram of an architecture of a satellite-terrestrial integrated network according to an embodiment of this application;
FIG. 1(b) is a diagram of another architecture of a satellite-terrestrial integrated network according to an embodiment of this application;
FIG. 1(c) is a diagram of another architecture of a satellite-terrestrial integrated network according to an embodiment of this application;
FIG. 2 is a schematic flowchart of a communication method according to an embodiment of this application;
FIG. 3 is a diagram of an operation time sequence according to an embodiment of this application;
FIG. 4 is a diagram of another operation time sequence according to an embodiment of this application;
FIG. 5 is a diagram of still another operation time sequence according to an embodiment of this application;
FIG. 6 is a diagram of a structure of a communication apparatus according to an embodiment of this application; and
FIG. 7 is a diagram of a structure of a terminal device according to an embodiment of this application.

### DESCRIPTION OF EMBODIMENTS

Long-time connection: For a terminal device that moves at a high speed, duration of being in a connected mode may be several minutes or dozens of minutes; for a terminal device that moves at a low speed, duration of being in the connected mode may be several hours or dozens of hours.

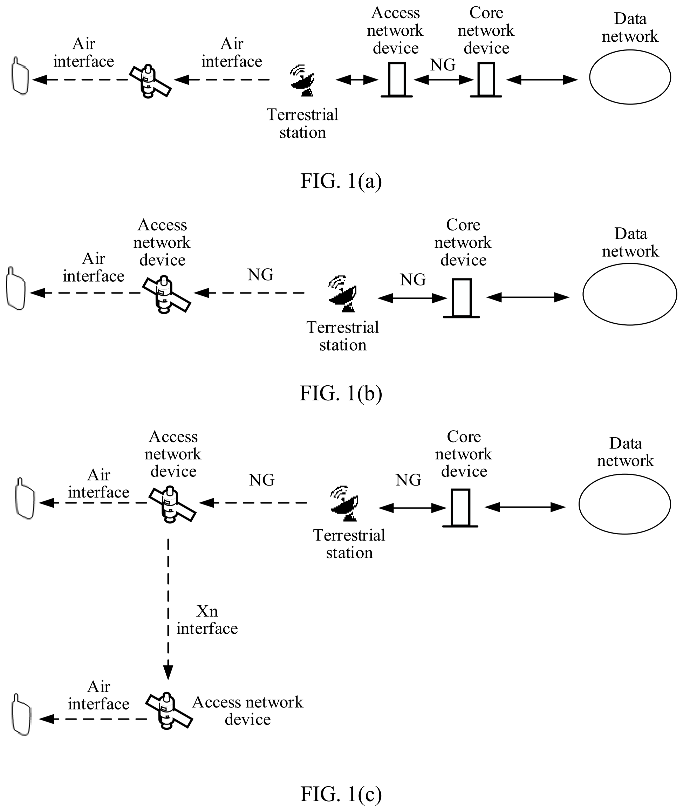

FIG. 1(a), FIG. 1(b), and FIG. 1(c) are diagrams of architectures of a satellite-terrestrial integrated network according to an embodiment of this application. The satellite-terrestrial integrated network combines terrestrial communication and satellite communication, and a terminal device may access a network through an air interface (for example, a 5G air interface). As shown in FIG. 1(a), an access network device may be deployed on the ground and connected to a terrestrial station that communicates with a satellite. As shown in FIG. 1(b), the access network device may alternatively be deployed on a satellite. The satellite is connected to a terrestrial station through a wireless link, and the terrestrial station or a terrestrial base station is connected to a core network in a wired or wireless manner. As shown in FIG. 1(c), a wireless link may exist between satellites. If the satellites have only a transparent transmission and forwarding function (that is, the base station is deployed on the ground), only transparent transmission and forwarding are performed between the satellites. If the base station or a part of base station functions are deployed on the satellite, signaling exchange and user data transmission between base stations may be completed between the satellites. Other network elements and interfaces are described as follows.

The terminal device is also referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. Currently, some examples of the terminal are: a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR)

device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like. In embodiments of this application, the terminal device may be a terminal device of an IoT type.

The access network device is a radio access network (radio access network, RAN) node (or device) that connects a terminal device to a wireless network, and may also be referred to as a base station. Currently, some examples of the RAN node are: an evolved NodeB (gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), a wireless fidelity (wireless fidelity, Wi-Fi) access point (access point, AP), or the like.

The access network device and the terminal may be deployed on land, including indoor or outdoor and handheld or vehicle-mounted devices, or may be deployed on water, or may be deployed on an airplane, a balloon, or a satellite in the air. Application scenarios of the access network device and the terminal device are not limited in embodiments of this application.

A core network device is a device in a core network (core network, CN) that provides service support for a terminal. Currently, some examples of the core network device are: an access and mobility management function (access and mobility management function, AMF) entity, a session management function (session management function, SMF) entity, a user plane function (user plane function, UPF) entity, and the like, which are not enumerated herein. The AMF entity may be responsible for access management and mobility management of the terminal. The SMF entity may be responsible for session management, for example, user session establishment. The UPF entity may be a functional entity on a user plane, and is mainly responsible for connecting to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element, an SMF functional entity, or the like.

Terrestrial station: is responsible for forwarding signaling and service data between a satellite base station and a core network.

Air interface: a wireless link between a terminal and a base station.

Xn interface: an interface between base stations, and mainly used for signaling exchange such as handover.

NG interface: an interface between a base station and a core network, which is mainly used for exchanging signaling, for example, NAS signaling, of the core network, and service data of a user.

This application is applied to a communication system such as 5G, relates to a radio access network element, for example, a terminal device, an access network device, and a terrestrial station, and performs uplink and downlink data communication based on a wireless communication protocol.

For a short-time connection communication scenario, it is considered that a terminal device initiates random access, and exits a connected mode after the terminal device completes sending of uplink data. In this process, the terminal device may obtain GNSS information before the random access, and the GNSS information remains valid before the terminal device exits the connected mode. Even in a case of terminal device moving and GNSS deviation, a synchronization requirement may still be satisfied. However, in a conventional technical solution, a long-time connection communication scenario is not considered. In the long-time connection communication scenario, the terminal device is in the connected mode for a long time, and duration in which the terminal device is in the connected mode may be determined based on a movement speed of the terminal device. The connection duration may be several minutes, several hours, or dozens of hours.

When the terminal device is in a long-time connected mode, the GNSS information may expire, and the terminal device needs to perform GNSS measurement again to obtain the GNSS information. In addition, for a terminal device of an IoT type, re-obtaining the GNSS information in the connected mode may affect normal communication to some extent. Consequently, the terminal device of the IoT type cannot simultaneously perform communication and GNSS measurement. In embodiments of this application, how to implement behavior of the terminal device of the IoT type in different GNSS scheduling cases in a satellite communication scenario and in long-time connection communication is described.

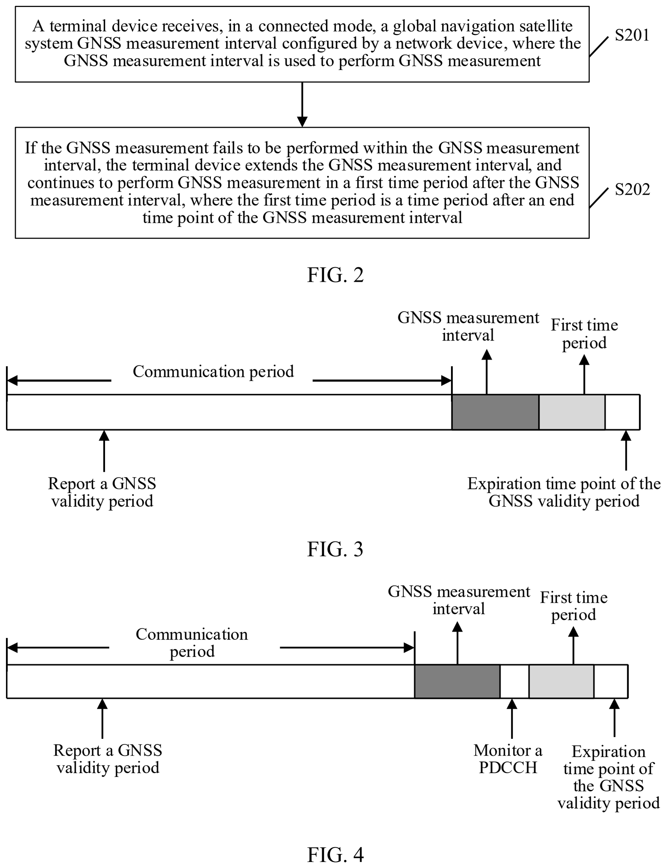

FIG. 2 is a schematic flowchart of a communication method according to an embodiment of this application. The method mainly includes the following steps.

S201: A terminal device receives, in a connected mode, a global navigation satellite system GNSS measurement interval configured by a network device, where the GNSS measurement interval is used to perform GNSS measurement.

Specifically, the network device may receive a GNSS validity period reported by the terminal device. Then, based on the reported GNSS validity period, duration required for the GNSS measurement, and a data scheduling manner, the GNSS measurement interval is configured. The GNSS measurement interval is sent to the terminal device. As a terminal device of an IoT type cannot simultaneously perform communication and GNSS measurement, the terminal device may complete interaction with the network device during a communication period (a non-GNSS-measurement period), to obtain the GNSS measurement interval configured by the network device. The GNSS validity period indicates a time period in which GNSS information is in a valid state.

S202: If the GNSS measurement fails to be performed within the GNSS measurement interval, the terminal device extends the GNSS measurement interval, and continues to perform GNSS measurement in a first time period after the GNSS measurement interval, where the first time period is a time period after an end time point of the GNSS measurement interval.

As the measurement interval is insufficient or a channel changes, the terminal device does not complete GNSS measurement or fails to perform GNSS measurement within the GNSS measurement interval, in other words, the terminal device does not obtain the GNSS information, and there is still a time period between the end time point of the GNSS measurement interval and an expiration time point of the GNSS validity period. Therefore, the terminal device may extend the GNSS measurement interval in the time period, and continue to perform GNSS measurement in the first time period after the end time point of the GNSS measurement interval, to obtain the GNSS information. The GNSS information may be location information of the terminal device, for example, longitude and latitude information, altitude information, and coordinate locations.

The first time period may be any time period between the end time point of the GNSS measurement interval and the expiration time point of the GNSS validity period. For example, the first time period may be between the end time point of the GNSS measurement interval and a time point before the expiration time point of the GNSS validity period, or the first time period may be between the end time point of the GNSS measurement interval and the expiration time point of the GNSS validity period, or the first time period may be between a time point after the end time point of the GNSS measurement interval and the expiration time point of the GNSS validity period.

It should be noted that the first time period may be obtained through extension by the terminal device, or may be scheduled by the network device, or may be agreed on in a protocol. This is not limited in embodiments of this application.

Optionally, the network device may configure maximum duration by which the GNSS measurement interval is extended. If the terminal device fails to perform GNSS within the GNSS measurement interval, the network device determines whether duration from the end point of the GNSS measurement interval to the expiration time point of the GNSS validity period is less than the maximum duration. If the duration is less than the maximum duration, the network device uses the duration from the end time point of the GNSS measurement interval to the expiration time point of the GNSS validity period as the first time period.

FIG. 3 is a diagram of an operation time sequence according to an embodiment of this application. First, a terminal device reports a GNSS validity period during a communication period (a non-GNSS-measurement period). After a network device configures a GNSS measurement interval for the terminal device, GNSS measurement starts to be performed when a start time point of the GNSS measurement interval arrives. If the GNSS measurement fails to be performed within the GNSS measurement interval, the terminal device performs extension by a first time period between an end time point of the GNSS measurement interval and an expiration time point of the GNSS validity period, and performs GNSS measurement in the first time period after the GNSS measurement interval.

Optionally, if the GNSS measurement fails to be performed in the first time period after the GNSS measurement interval, that is, GNSS information is still not obtained in the first time period after extension, the terminal device switches from a connected mode to an idle mode. Alternatively, the terminal device may perform GNSS measurement after expiration time of the GNSS validity period. Alternatively, the terminal device may send feedback information to the network device. The feedback information indicates that the GNSS measurement fails to be performed or the network device reschedules a GNSS measurement resource (for example, the GNSS measurement interval).

If the GNSS measurement is successfully performed in the first time period after the GNSS measurement interval, the terminal device sends feedback information to the network device. The feedback information indicates first GNSS validity duration or that the GNSS measurement is successful, where the first GNSS validity duration is a time interval between the end time point of the GNSS measurement interval and the expiration time point of the GNSS validity period, or between a time point when the terminal device sends the GNSS validity period to the network device and the expiration time point of the GNSS validity period. In this way, the network device can reconfigure the GNSS measurement interval for the terminal device before the expiration time point of the GNSS validity period.

The feedback information may be sent in a random access sequence, or may be sent using an uplink resource scheduled by the network device, or may be sent using a preconfigured uplink resource.

Optionally, if the terminal device fails to perform GNSS within the GNSS measurement interval, the terminal device may receive only downlink data after the expiration time of the GNSS validity period. Alternatively, if the terminal device fails to perform GNSS within the GNSS measurement interval, the terminal device may continue to perform GNSS measurement in the first time period after the GNSS measurement interval, and receive only downlink data before the expiration time point of the GNSS validity period.

Optionally, the terminal device monitors a PDCCH in a second time period after the GNSS measurement interval. If the PDCCH is not detected through monitoring in the second time period after the GNSS measurement interval, the terminal device continues to perform GNSS measurement in the first time period after the GNSS measurement interval. That the PDCCH is not detected through monitoring indicates that the PDCCH scheduled by the network device for the terminal device is not detected through monitoring. If the PDCCH is detected through monitoring in the second time period after the GNSS measurement interval, the terminal device sends feedback information to the network device based on scheduling information carried by the PDCCH.

The second time period may be between the end time point of the GNSS measurement interval and a time point before the expiration time point of the GNSS validity period. The second time period may completely or partially overlap the first time period, and the second time period may alternatively be before the first time period.

It should be noted that the second time period may be obtained through extension by the terminal device, or may be configured by the network device, or may be agreed on in a protocol. After failing to perform GNSS within the GNSS measurement interval, the terminal device may simultaneously monitor the PDCCH and perform GNSS measurement, or only monitor the PDCCH, or only perform GNSS measurement, or first monitor the PDCCH and then perform GNSS measurement. This is not limited in this application document.

FIG. 4 is a diagram of another operation time sequence according to an embodiment of this application. First, a terminal device reports a GNSS validity period during a communication period (a non-GNSS-measurement period). After a network device configures a GNSS measurement interval for the terminal device, GNSS measurement starts to be performed when a start time point of the GNSS measurement interval arrives. If the GNSS measurement fails to be performed within the GNSS measurement interval, the terminal device monitors a PDCCH in a second time period. If the PDCCH is not detected through monitoring in the second time period, the terminal device continues to perform GNSS measurement in first time obtained through extension by the terminal device.

It should be understood that, after GNSS fails to be performed within the GNSS measurement interval, the network device may send the PDCCH to the terminal device in the second time period. The PDCCH may be used to carry scheduling information. The scheduling information may be used to reschedule a GNSS measurement interval (for example, the first time period), or may be used to schedule a time-frequency resource of media access control control element (media access control control element, MAC-CE) signaling, or may be used to schedule a time-frequency resource of acknowledgement (acknowledgement, ACK)/negative acknowledgement (negative acknowledgement, NACK) feedback corresponding to the MAC-CE signaling. The terminal device may monitor the PDCCH in the second time period after the GNSS measurement interval. If the PDCCH is detected through monitoring in the second time period, the PDCCH is descrambled, to obtain the scheduling information carried by the PDCCH, and the MAC-CE signaling sent by the network device is received based on the scheduling information. The MAC-CE signaling may indicate the terminal device to continue to perform GNSS measurement. If a hybrid automatic repeat request (hybrid automatic repeat request, HARQ) function of the terminal device is not disabled, for whether to continue to perform GNSS measurement or whether the GNSS measurement is successfully performed, the terminal device may feed back an ACK or NACK to the network device based on the scheduling information.

Further, the terminal device monitors the PDCCH in the second time period after the GNSS measurement interval. If the PDCCH is detected through monitoring, the terminal device may obtain the scheduling information carried by the PDCCH. If the scheduling information is used to reschedule a GNSS measurement interval (for example, the first time period), the terminal device may continue to perform GNSS measurement in the rescheduled GNSS measurement interval. If the GNSS measurement that continues to be performed within the rescheduled GNSS measurement interval is successful, first GNSS validity duration or a GNSS measurement success may be fed back to the network device based on the scheduling information carried by the PDCCH. The first GNSS validity duration is a time interval between an end time point of the GNSS measurement interval and an expiration time point of the GNSS validity period, or between a time point when the terminal device sends the GNSS validity period to the network device and the expiration time point of the GNSS validity period. If the GNSS measurement that continues to be performed within the rescheduled GNSS measurement interval fails, the terminal device switches from a connected mode to an idle mode.

It should be noted that after the end time point of the GNSS measurement interval, whether the terminal device monitors the PDCCH may be determined based on a second GNSS validity duration, or may be determined by the terminal device. Duration (namely, the second time period) in which the terminal device monitors the PDCCH may be agreed on in a protocol, or may be configured by the network device, or may be behavior implemented by the terminal device. If the duration is the behavior implemented by the terminal device, the network device may continue to send the PDCCH or send downlink data.

Further, the terminal device monitors the PDCCH in the second time period after the GNSS measurement interval. If the PDCCH is detected through monitoring in the second time period after the GNSS measurement interval, and the scheduling information carried by the PDCCH indicates a time-frequency resource of feedback information, the terminal device may send the feedback information to the network device based on the scheduling information carried by the PDCCH. However, if a feedback time point of the feedback information on the time-frequency resource exceeds the expiration time point of the GNSS validity period, the terminal device performs one or more of the following steps:
switching from the connected mode to an idle mode;
starting to perform GNSS measurement after receiving first signaling, and if the GNSS measurement fails to be performed, switching from the connected mode to the idle mode, where the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

In addition, if the terminal device successfully performs GNSS measurement after receiving the first signaling, or successfully performs GNSS measurement after receiving the PDCCH, the terminal device may send a first GNSS validity duration to the network device. The first GNSS validity duration is a time interval between the end time point of the GNSS measurement interval and the expiration time point of the GNSS validity period, or between a time point when the terminal device sends the GNSS validity period to the network device and the expiration time point of the GNSS validity period. In this way, the network device reconfigures the GNSS measurement interval for the terminal device before the expiration time point of the GNSS validity period.

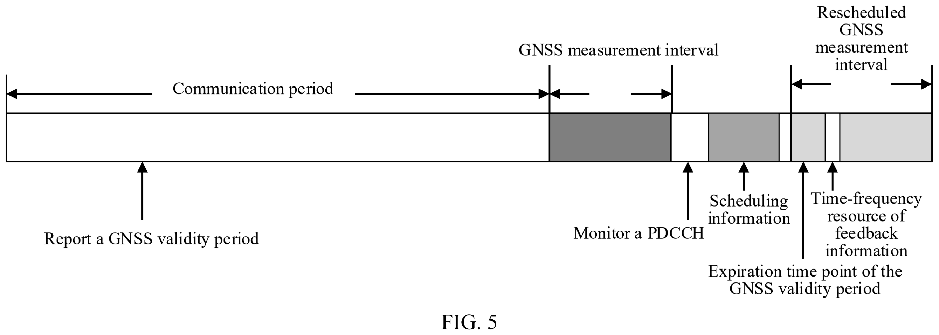

FIG. 5 is a diagram of another operation time sequence according to an embodiment of this application. First, a terminal device reports a GNSS validity period during a communication period (a non-GNSS-measurement period). After a network device configures a GNSS measurement interval for the terminal device, GNSS measurement starts to be performed when a start time point of the GNSS measurement interval arrives. If the GNSS measurement fails to be performed within the GNSS measurement interval, the terminal device monitors a PDCCH in a second time period. If the terminal device detects the PDCCH through monitoring, the terminal device obtains scheduling information carried by the PDCCH, where the scheduling information is for rescheduling a GNSS measurement interval and a time-frequency resource of ACK/NACK feedback information corresponding to a MAC-CE. However, a time point of the time-frequency resource of the ACK/NACK feedback information has exceeded an expiration time point of the GNSS validity period. Therefore, when the expiration time point of the GNSS validity period arrives, the terminal device may switch from a connected mode to an idle mode.

Optionally, if the terminal device detects the PDCCH through monitoring in the second time period after the GNSS measurement interval, the terminal device may send feedback information to the network device based on the scheduling information carried by the PDCCH. The feedback information includes second GNSS validity duration (between a time point at which the GNSS measurement fails to be performed and the expiration time point of the GNSS validity period). Therefore, the network device is expected to reschedule a GNSS measurement resource (for example, the GNSS measurement interval) in the second GNSS validity duration. If the terminal device receives, in the second GNSS validity duration, the GNSS measurement resource (for example, a scheduled first time period) scheduled by the network device, the terminal device continues to perform GNSS measurement on the GNSS measurement resource. If the GNSS measurement resource scheduled by the network device is not received in the second GNSS validity duration, the terminal device switches from the connected mode to the idle mode or performs GNSS measurement once at the expiration time point of the GNSS validity period.

Optionally, the network device may schedule, after the expiration time point of the GNSS validity period, the terminal device to perform GNSS measurement feedback, for example, re-feed back a GNSS validity period, where the network device configures a GNSS measurement interval for the terminal device based on the re-fed back GNSS validity period. Alternatively, the network device may preconfigure an uplink resource, and the terminal device may send feedback information on the preconfigured uplink resource after the GNSS measurement interval. In this way, the terminal device does not need to first monitor the PDCCH, but directly performs feedback on the preconfigured uplink resource.

Optionally, after the terminal device fails to perform GNSS within the GNSS measurement interval, the terminal device may determine second GNSS validity duration, where the second GNSS validity duration is between an end time point of the GNSS measurement interval and the expiration time point of the GNSS validity period, or between a time point when the GNSS measurement fails to be performed and the expiration time point of the GNSS validity period. When the second GNSS validity duration is greater than a first preset threshold, the terminal device may monitor the PDCCH in the second time period after the GNSS measurement interval. If the PDCCH is not detected through monitoring by the terminal device by arrival of the expiration time point of the GNSS validity period, the terminal device switches from the connected mode to the idle mode. Alternatively, when the second GNSS validity duration is greater than the first preset threshold, after monitoring the PDCCH in the second time period through detection, the terminal device sends the feedback information to the network device based on the scheduling information carried by the PDCCH.

Alternatively, when the second GNSS validity duration is greater than the first preset threshold, after failing to perform GNSS measurement within the GNSS measurement interval, the terminal device may send the feedback information to the network device. The feedback information indicates the second GNSS validity duration, so that the network device is expected to reschedule a GNSS measurement resource (for example, the first time period) in the second GNSS validity duration. The terminal device waits for rescheduling of the network device in the second GNSS validity duration. If the terminal device still does not receive the scheduling information of the network device before the expiration time point of the GNSS validity period, the terminal device may directly enter the idle mode, or may extend the GNSS measurement interval and perform GNSS measurement in the first time period after extension.

When the second GNSS validity duration is less than or equal to the first preset value, if the network device schedules, in the second time period after the GNSS measurement interval, the terminal device to perform GNSS measurement, a time point when the terminal device sends the feedback information to the network device may exceed the expiration time point of the GNSS validity period. Therefore, when the second GNSS validity duration is less than or equal to the first preset value, the terminal device may perform only GNSS measurement, and does not need to monitor the PDCCH. Alternatively, when the second GNSS validity duration is less than or equal to the first preset value, the network device may send the scheduling information to the terminal device after the expiration time point of the GNSS validity period, where the scheduling information is for scheduling the terminal device to perform GNSS measurement feedback. The terminal device may receive the scheduling information of the network device after the expiration time point of the GNSS validity period, to perform GNSS measurement feedback.

Alternatively, when the second GNSS validity duration is less than or equal to the first preset threshold, the terminal device directly extends the GNSS measurement interval, and continues to perform GNSS measurement in first time obtained through extension. For example, the terminal device may extend the GNSS measurement interval to the expiration time point of the GNSS validity period, and perform GNSS measurement in this time period. In this period, the network device does not schedule the terminal device to perform GNSS measurement feedback. If the GNSS measurement that continues to be performed in the first time period after the GNSS measurement interval fails, the terminal device switches from the connected mode to the idle mode. Alternatively, when the second GNSS validity duration is less than or equal to the first preset threshold, the terminal device performs GNSS measurement after the expiration time point of the GNSS validity period. The first preset threshold may be configured by the network device, or may be agreed on in a protocol.

Optionally, as the terminal device sends an uplink signal, this implicitly indicates that the GNSS measurement is successfully performed by the terminal device. When the network device receives the uplink signal sent by the terminal device before the expiration time point of the GNSS validity period, regardless of whether the terminal device successfully performs GNSS measurement, the network device considers that the terminal device successfully completes GNSS measurement. Therefore, if the GNSS measurement fails to be performed within the GNSS measurement interval, or the GNSS measurement fails to be performed in the first time period after the GNSS measurement interval, the terminal device sends first indication information to the network device, where the first indication information indicates the second GNSS validity duration and/or failed GNSS measurement. The second GNSS validity duration is between the end time point of the GNSS measurement interval and the expiration time point of the GNSS validity period, or between a time point when the GNSS measurement fails to be performed and the expiration time point of the GNSS validity period.

Besides, in addition to sending the first indication information, the terminal device may further perform GNSS measurement after the expiration time point of the GNSS validity period; or start to perform GNSS measurement after sending the first indication information; or switch from the connected mode to the idle mode if no scheduling information of the network device is received in a period of time; or wait for the scheduling information of the network device, and switch from the connected mode to the idle mode if no scheduling information of the network device is received by the expiration time point of the GNSS validity period; or start to perform GNSS measurement if no scheduling information of the network device is received in a period of time. Alternatively, whether to monitor the PDCCH is determined based on the second GNSS validity duration, and the PDCCH is monitored only when the second GNSS validity duration is greater than the first preset threshold.

It should be noted that behavior of the terminal device and duration related to the behavior of the terminal device, such as whether the terminal device monitors the PDCCH and duration of monitoring the PDCCH, or whether the terminal device independently performs GNSS measurement and duration of performing GNSS measurement, may both be configured by the network device, or may be agreed on in a protocol.

In embodiments of this application, for a terminal device of an IoT type in a satellite communication scenario and in long-time connection communication, behavior of the terminal device in different GNSS scheduling cases is specified. For example, the GNSS measurement interval is extended after the GNSS measurement fails to be performed within the GNSS measurement interval, and whether to monitor the PDCCH is determined based on a time interval between the time point when the GNSS measurement fails to be performed in the GNSS measurement interval and the expiration time point of the GNSS validity period, so as to ensure that communication is not affected when the GNSS measurement is performed, thereby improving communication efficiency and quality.

It may be understood that in the foregoing method embodiment, the method and operations implemented by the terminal device may alternatively be implemented by a component (for example, a chip or a circuit) that can be used in the terminal device.

In embodiments of this application, the terminal device may be divided into functional modules based on the foregoing method example. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

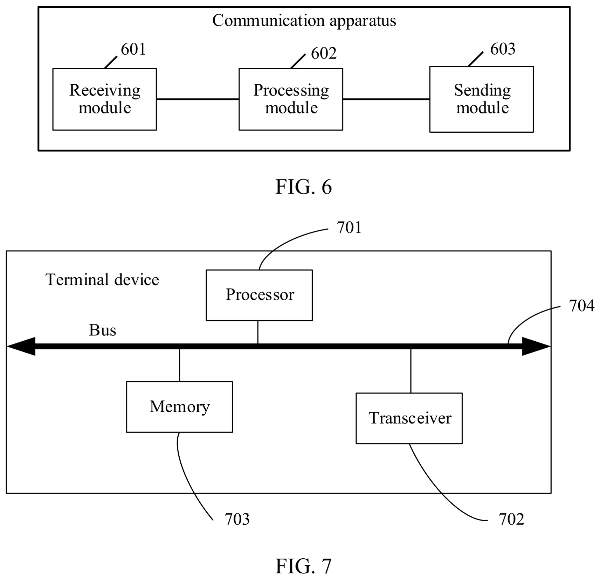

The foregoing describes in detail the method provided in embodiments of this application with reference to FIG. 2. The following describes in detail a communication apparatus provided in an embodiment of this application with reference to FIG. 6. It should be understood that descriptions of apparatus embodiments correspond to the descriptions of the method embodiment. Therefore, for content that is not described in detail, refer to the foregoing method embodiment. For brevity, details are not described herein again.

FIG. 6 is a diagram of a structure of a communication apparatus according to an embodiment of this application. The communication apparatus may include a receiving module 601, a processing module 602, and a sending module 603. The receiving module 601 and the sending module 603 may communicate with the outside, and the processing module 602 is configured to perform processing, for example, perform GNSS measurement. The receiving module 601 and the sending module 603 may also be referred to as a communication interface, a transceiver unit, or a transceiver module.

In a possible design, the communication apparatus may implement steps or procedures performed by the terminal device corresponding to the foregoing method embodiment, for example, may be a terminal device, or a chip or a circuit configured in the terminal device. The receiving module 601 and the sending module 603 are configured to perform receiving and sending related operations of the terminal device in the foregoing method embodiment. The processing module 602 is configured to perform processing-related operations of the terminal device in the foregoing method embodiment.

The receiving module 601 is configured to receive, in a connected mode, a global navigation satellite system GNSS measurement interval configured by a network device, where the GNSS measurement interval is used to perform GNSS measurement.

The processing module 602 is configured to: if the GNSS measurement fails to be performed within the GNSS measurement interval, extend the GNSS measurement interval, and continue to perform GNSS measurement in a first time period after the GNSS measurement interval, where the first time period is a time period after an end time point of the GNSS measurement interval.

Optionally, the processing module 602 is further configured to: if the GNSS measurement fails to be performed in the first time period after the GNSS measurement interval, switch from the connected mode to an idle mode.

Optionally, the sending module 603 is configured to: if the GNSS measurement is successfully performed in the first time period after the GNSS measurement interval, send first GNSS validity duration to the network device, where the first GNSS validity duration is a time interval between the end time point of the GNSS measurement interval and an expiration time point of a GNSS validity period.

Optionally, the processing module 602 is further configured to: monitor a physical downlink control channel PDCCH in a second time period after the GNSS measurement interval, where the second time period is between the end time point of the GNSS measurement interval and a time point before an expiration time point of a GNSS validity period; and if the PDCCH is not detected through monitoring in the second time period after the GNSS measurement interval, continue to perform GNSS measurement in the first time period after the GNSS measurement interval.

Optionally, the processing module 602 is further configured to: monitor a physical downlink control channel PDCCH in a second time period after the GNSS measurement interval, where the second time period is between the end time point of the GNSS measurement interval and a time point before an expiration time point of a GNSS validity period; and if the PDCCH is detected through monitoring in the second time period after the GNSS measurement interval, send feedback information to the network device based on scheduling information carried by the PDCCH.

Optionally, the processing module 602 is further configured to: determine second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, monitor the physical downlink control channel PDCCH in the second time period after the GNSS measurement interval; and if the PDCCH is not detected through monitoring by the terminal device by arrival of the expiration time point of the GNSS validity period, the terminal device switches from the connected mode to an idle mode.

Optionally, the scheduling information is for scheduling a time-frequency resource of the feedback information. The processing module 602 is further configured to: if a feedback time point of the feedback information on the time-frequency resources exceeds the expiration time point of the GNSS validity period, perform one or more of the following steps:
switching from the connected mode to an idle mode;
starting to perform GNSS measurement after receiving first signaling, and if the GNSS measurement fails to be performed, switching from the connected mode to the idle mode, where the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

Optionally, the processing module 602 is further configured to: determine second GNSS validity duration, where the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, send the feedback information to the network device based on the scheduling information carried by the PDCCH; or when the second GNSS validity duration is less than or equal to the first preset threshold, the terminal device receives the scheduling information of the network device after the expiration time point of the GNSS validity period, to perform GNSS measurement feedback.

The feedback information includes the second GNSS validity duration.

Optionally, the processing module 602 is further configured to: if a GNSS measurement resource scheduled by the network device is received in the second GNSS validity duration, continue to perform GNSS measurement on the GNSS measurement resource.

Optionally, the processing module 602 is further configured to: if a GNSS measurement resource scheduled by the network device is not received in the second GNSS validity duration, switch from the connected mode to an idle mode or start to perform GNSS measurement once at the expiration time point of the GNSS validity period.

Optionally, the processing module 602 is further configured to: determine second GNSS validity duration, where the second GNSS validity duration is between the end time point of the GNSS measurement interval and an expiration time point of the GNSS validity period, or between a time point when the GNSS measurement fails to be performed and the expiration time point of the GNSS validity period; and when the second GNSS validity duration is less than or equal to a first preset threshold, continue to perform GNSS measurement in the first time period after the GNSS measurement interval; and if the GNSS measurement fails to be performed in the first time period after the GNSS measurement interval, the terminal device switches from the connected mode to an idle mode.

Optionally, the sending module 603 is configured to: if the GNSS measurement fails to be performed in the first time period after the GNSS measurement interval, send first indication information to the network device, where the first indication information indicates the second GNSS validity duration and/or failed GNSS measurement.

It should be noted that for implementation of each module, refer to the corresponding description in the method embodiment shown in FIG. 2, to perform the method and the functions performed by the terminal device in the foregoing embodiment.

FIG. 7 is a diagram of a structure of a terminal device according to an embodiment of this application. The terminal device may be used in the systems shown in FIG. 1(a), FIG. 1(b), and FIG. 1(c), to perform functions of the terminal device in the foregoing method embodiment, or implement steps or procedures performed by the terminal device in the foregoing method embodiment.

As shown in FIG. 7, the terminal device includes a processor 701 and a transceiver 702. Optionally, the terminal device also includes a memory 703. The processor 701, the transceiver 702, and the memory 703 communicate with each other through an internal connection path, to transfer a control signal and/or a data signal. The memory 703 is configured to store a computer program. The processor 701 is configured to invoke the computer program from the memory 703 and run the computer program, to control the transceiver 702 to receive and send the signal. Optionally, the terminal device may also include an antenna, configured to send, through a radio signal, uplink data or uplink control signaling that is output by the transceiver 702.

The foregoing processor 701 may correspond to the processing module in FIG. 6. The foregoing processor 701 and the memory 703 may be combined into a processing apparatus. The processor 701 is configured to execute program code stored in the memory 703 to implement the foregoing functions. During specific implementation, the memory 703 may alternatively be integrated into the processor 701, or independent of the processor 701.

The foregoing transceiver 702 may correspond to the receiving module and the sending module in FIG. 6, and may also be referred to as a transceiver unit or a transceiver module. The transceiver 702 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device shown in FIG. 7 can implement various processes of the terminal device in the method embodiment shown in FIG. 2. Operations and/or functions of various modules in the terminal device are intended to implement the corresponding procedures in the foregoing method embodiment. For details, refer to the descriptions in the foregoing method embodiment. To avoid repetition, detailed descriptions are properly omitted herein.

The foregoing processor 701 may be configured to perform actions that are implemented inside the terminal device and that are described in the foregoing method embodiments, and the transceiver 702 may be configured to perform actions of sending by the terminal device to an access network device or receiving by the terminal device from the access network device that are described in the foregoing method embodiment. For details, refer to the descriptions in the foregoing method embodiment. Details are not described herein again.

The processor 701 may be a central processing unit, a general-purpose processor, a digital signal processor, an application-specific integrated circuit, a field programmable gate array or another programmable logical device, a transistor logical device, a hardware component, or any combination thereof. The processor may implement or execute various example logical blocks, modules, and circuits described with reference to content disclosed in this application. Alternatively, the processor 701 may be a combination of processors implementing a computing function, for example, a combination of one or more microprocessors, or a combination of a digital signal processor and a microprocessor. A communication bus 704 may be a peripheral component interconnect PCI bus, an extended industry standard architecture EISA bus, or the like. The bus may be classified into an address bus, a data bus, a control bus, and the like. For ease of representation, only one bold line is used for representation in FIG. 7, but this does not mean that there is only one bus or only one type of bus. The communication bus 704 is configured to implement connection and communication between these components. The transceiver 702 in this embodiment of this application is configured to perform signaling or data communication with another node device. The memory 703 may include a volatile memory, for example, a nonvolatile dynamic random access memory (nonvolatile random access memory, NVRAM), a phase change random access memory (phase change RAM, PRAM), or a magnetoresistive random access memory (magnetoresistive RAM, MRAM), or may include a nonvolatile memory, for example, at least one magnetic disk storage device, an electrically erasable programmable read-only memory (electrically erasable programmable read-only memory, EEPROM), a flash memory device like a NOR flash memory (NOR flash memory) or a NAND flash memory (NAND flash memory), or a semiconductor device like a solid state disk (solid state disk, SSD). Optionally, the memory 703 may alternatively be at least one storage apparatus that is away from the foregoing processor 701. Optionally, the memory 703 may also store a group of computer program code or configuration information. Optionally, the processor 701 may also execute the program stored in the memory 703. The processor may cooperate with the memory and the transceiver to perform any method and function of the terminal device in the foregoing embodiments of this application.

An embodiment of this application further provides a chip system. The chip system includes a processor, configured to support a terminal device in implementing functions in any one of the foregoing embodiments, for example, generating or processing GNSS information in the foregoing method.

In a possible design, the chip system further includes a memory. The memory is configured to store a computer program and data that are necessary for the terminal device. The chip system may include a chip, or may include a chip and another discrete component. Input and output of the chip system are respectively corresponding to receiving and sending operations of the terminal device in the method embodiment.

According to the method provided in embodiments of this application, this application further provides a computer program product. The computer program product includes a computer program, and when the computer program is run on a computer, the computer is enabled to perform the method in any embodiment shown in FIG. 2.

According to the method provided in embodiments of this application, this application further provides a computer-readable medium. The computer-readable medium stores a computer program, and when the computer program is run on a computer, the computer is enabled to perform the method in any embodiment shown in FIG. 2.

According to the method provided in embodiments of this application, this application further provides a communication system, including the foregoing one or more terminal devices and the foregoing one or more network devices.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device or a chip in the terminal device, and the method comprises:
receiving, in a connected mode, a global navigation satellite system GNSS measurement interval configured by a network device, wherein the GNSS measurement interval is used to perform GNSS measurement; and
if the GNSS measurement fails to be performed within the GNSS measurement interval, extending the GNSS measurement interval, and continuing to perform GNSS measurement in a first time period after the GNSS measurement interval, wherein the first time period is a time period after an end time point of the GNSS measurement interval.

2. The method according to claim 1, wherein the method further comprises:
if the GNSS measurement fails to be performed in the first time period after the GNSS measurement interval, switching from the connected mode to an idle mode.

3. The method according to claim 1, wherein the method further comprises:
if the GNSS measurement is successfully performed in the first time period after the GNSS measurement interval, sending first GNSS validity duration to the network device, wherein the first GNSS validity duration is a time interval between the end time point of the GNSS measurement interval and an expiration time point of a GNSS validity period.

4. The method according to claim 1, wherein the method further comprises:
monitoring a physical downlink control channel PDCCH in a second time period after the GNSS measurement interval, wherein the second time period is between the end time point of the GNSS measurement interval and a time point before an expiration time point of a GNSS validity period; and
if the PDCCH is not detected through monitoring in the second time period after the GNSS measurement interval, continuing to perform GNSS measurement in the first time period after the GNSS measurement interval.

5. The method according to claim 1, wherein the method further comprises:
monitoring a PDCCH in a second time period after the GNSS measurement interval, wherein the second time period is between the end time point of the GNSS measurement interval and a time point before an expiration time point of a GNSS validity period; and
if the PDCCH is detected through monitoring in the second time period after the GNSS measurement interval, sending feedback information to the network device based on scheduling information carried by the PDCCH.

6. The method according to claim 4 or 5, wherein the monitoring, by the terminal device, the PDCCH in the first time period after the GNSS measurement interval comprises:
determining second GNSS validity duration, wherein the second GNSS validity duration is between the end time point of the GNSS measurement interval and the expiration time point of the GNSS validity period, or between a time point when the GNSS measurement fails to be performed and the expiration time point of the GNSS validity period; and
when the second GNSS validity duration is greater than a first preset threshold, monitoring the PDCCH in the second time period after the GNSS measurement interval, and if the PDCCH is not detected through monitoring by the terminal device by arrival of the expiration time point of the GNSS validity period, switching from the connected mode to an idle mode.

7. The method according to claim 5, wherein the scheduling information is for scheduling a time-frequency resource of the feedback information, and the method further comprises:
if a feedback time point of the feedback information on the time-frequency resource exceeds the expiration time point of the GNSS validity period, performing one or more of the following steps:
switching from the connected mode to an idle mode;
starting to perform GNSS measurement after receiving first signaling, and if the GNSS measurement fails to be performed, switching from the connected mode to the idle mode, wherein the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

8. The method according to claim 5, wherein the method further comprises:
determining second GNSS validity duration, wherein the second GNSS validity duration is between the end time point of the GNSS measurement interval and the expiration time point of the GNSS validity period, or between a time point when the GNSS measurement fails to be performed and the expiration time point of the GNSS validity period; and
when the second GNSS validity duration is greater than a first preset threshold, sending the feedback information to the network device based on the scheduling information carried by the PDCCH; or when the second GNSS validity duration is less than or equal to the first preset threshold, receiving the scheduling information of the network device after the expiration time point of the GNSS validity period, to perform GNSS measurement feedback.

9. The method according to claim 8, wherein the feedback information comprises the second GNSS validity duration.

10. The method according to claim 8 or 9, wherein the method further comprises:
if a GNSS measurement resource scheduled by the network device is received in the second GNSS validity duration, continuing to perform GNSS measurement on the GNSS measurement resource.

11. The method according to claim 8 or 9, wherein the method further comprises:
if a GNSS measurement resource scheduled by the network device is not received in the second GNSS validity duration, switching from the connected mode to an idle mode or starting to perform GNSS measurement once at the expiration time point of the GNSS validity period.

12. The method according to claim 1, wherein the method further comprises:
determining second GNSS validity duration, wherein the second GNSS validity duration is between the end time point of the GNSS measurement interval and an expiration time point of the GNSS validity period, or between a time point when the GNSS measurement fails to be performed and the expiration time point of the GNSS validity period; and
when the second GNSS validity duration is less than or equal to a first preset threshold, continuing to perform GNSS measurement in the first time period after the GNSS measurement interval; and if the GNSS measurement fails to be performed in the first time period after the GNSS measurement interval, switching from the connected mode to an idle mode.

13. The method according to claim 12, wherein the method further comprises:
if the GNSS measurement fails to be performed in the first time period after the GNSS measurement interval, sending first indication information to the network device, wherein the first indication information indicates the second GNSS validity duration and/or failed GNSS measurement.

14. A communication apparatus, wherein the apparatus comprises:
a receiving module, configured to receive, in a connected mode, a global navigation satellite system GNSS measurement interval configured by a network device, wherein the GNSS measurement interval is used to perform GNSS measurement; and
a processing module, configured to: if the GNSS measurement fails to be performed within the GNSS measurement interval, extend the GNSS measurement interval, and continue to perform GNSS measurement in a first time period after the GNSS measurement interval, wherein the first time period is a time period after an end time point of the GNSS measurement interval.

15. The apparatus according to claim 14, wherein
the processing module is further configured to: if the GNSS measurement fails to be performed in the first time period after the GNSS measurement interval, switch from the connected mode to an idle mode.

16. The apparatus according to claim 14, wherein the apparatus further comprises:
a sending module, configured to: if the GNSS measurement is successfully performed in the first time period after the GNSS measurement interval, send first GNSS validity duration to the network device, wherein the first GNSS validity duration is a time interval between the end time point of the GNSS measurement interval and an expiration time point of a GNSS validity period.

17. The apparatus according to claim 14, wherein
the processing module is further configured to: monitor a physical downlink control channel PDCCH in a second time period after the GNSS measurement interval, wherein the second time period is between the end time point of the GNSS measurement interval and a time point before an expiration time point of a GNSS validity period; and if the PDCCH is not detected through monitoring in the second time period after the GNSS measurement interval, continue to perform GNSS measurement in the first time period after the GNSS measurement interval.

18. The apparatus according to claim 14, wherein
the processing module is further configured to: monitor a PDCCH in a second time period after the GNSS measurement interval, wherein the second time period is between the end time point of the GNSS measurement interval and a time point before an expiration time point of a GNSS validity period; and if the PDCCH is detected through monitoring in the second time period after the GNSS measurement interval, send feedback information to the network device based on scheduling information carried by the PDCCH.

19. The apparatus according to claim 17 or 18, wherein
the processing module is further configured to: determine second GNSS validity duration, wherein the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, monitor the physical downlink control channel PDCCH in the second time period after the GNSS measurement interval; and if the PDCCH is not detected through monitoring by the terminal device by arrival of the expiration time point of the GNSS validity period, the terminal device switches from the connected mode to an idle mode.

20. The apparatus according to claim 18, wherein the scheduling information is for scheduling a time-frequency resource of the feedback information, and
the processing module is further configured to: if a feedback time point of the feedback information on the time-frequency resources exceeds the expiration time point of the GNSS validity period, perform one or more of the following steps:
switching from the connected mode to an idle mode;
starting to perform GNSS measurement after receiving first signaling, and if the GNSS measurement fails to be performed, switching from the connected mode to the idle mode, wherein the first signaling indicates to perform GNSS measurement;
performing GNSS measurement after receiving the PDCCH, and if the GNSS measurement fails to be performed, switching from the connected mode to the idle mode; and
when the expiration time point of the GNSS validity period arrives, switching from the connected mode to the idle mode.

21. The apparatus according to claim 18, wherein
the processing module is further configured to: determine second GNSS validity duration, wherein the second GNSS validity duration is between the end time point of the GNSS measurement interval and the expiration time point of the GNSS validity period, or between a time point when the GNSS measurement fails to be performed and the expiration time point of the GNSS validity period; and when the second GNSS validity duration is greater than a first preset threshold, send the feedback information to the network device based on the scheduling information carried by the PDCCH; or when the second GNSS validity duration is less than or equal to the first preset threshold, the terminal device receives the scheduling information of the network device after the expiration time point of the GNSS validity period, to perform GNSS measurement feedback.

22. The apparatus according to claim 21, wherein the feedback information comprises the second GNSS validity duration.

23. The apparatus according to claim 21 or 22, wherein
the processing module is further configured to: if a GNSS measurement resource scheduled by the network device is received in the second GNSS validity duration, continue to perform GNSS measurement on the GNSS measurement resource.

24. The apparatus according to claim 21 or 22, wherein
the processing module is further configured to: if a GNSS measurement resource scheduled by the network device is not received in the second GNSS validity duration, switch from the connected mode to an idle mode or start to perform GNSS measurement once at the expiration time point of the GNSS validity period.

25. The apparatus according to claim 14, wherein
the processing module is further configured to: determine second GNSS validity duration, wherein the second GNSS validity duration is between the end time point of the GNSS measurement interval and an expiration time point of the GNSS validity period, or between a time point when the GNSS measurement fails to be performed and the expiration time point of the GNSS validity period; and when the second GNSS validity duration is less than or equal to a first preset threshold, continue to perform GNSS measurement in the first time period after the GNSS measurement interval; and if the GNSS measurement fails to be performed in the first time period after the GNSS measurement interval, the terminal device switches from the connected mode to an idle mode.

26. The apparatus according to claim 25, wherein the apparatus further comprises:
a sending module, configured to: if the GNSS measurement fails to be performed in the first time period after the GNSS measurement interval, send first indication information to the network device, wherein the first indication information indicates the second GNSS validity duration and/or failed GNSS measurement.

27. A communication apparatus, comprising a memory and a processor, wherein the memory is configured to store a computer program, and the processor runs the computer program, to enable the communication apparatus to perform the method according to any one of claims 1 to 13.

28. A computer-readable storage medium, wherein the computer-readable storage medium comprises a computer program, and when the computer program is run by a processor, the method according to any one of claims 1 to 13 is implemented.

29. A computer program product comprising a computer program, wherein when the computer program is executed, the method according to any one of claims 1 to 13 is implemented.
